(19) Europäisches Patentamt

European Patent Office

Office européen des brevets

(11) EP 0 550 852 B1

(12) **EUROPEAN PATENT SPECIFICATION**

(45) Date of publication and mention
of the grant of the patent:
**19.03.1997 Bulletin 1997/12**

(51) Int Cl.⁶: **G01S 13/93**, G01S 17/88

(21) Application number: **92121340.1**

(22) Date of filing: **15.12.1992**

(54) **Apparatus and method for detecting and warning of possible collision with rear of vehicle in front**

Gerät und Verfahren zur Detektion und Warnung einer Kollision mit der Hinterseite des vorherfahrenden Fahrzeugs

Appareil et procédé de détection et d'avertissement d'une collision avec un véhicule en avant

(84) Designated Contracting States:
**DE FR GB**

(30) Priority: **16.12.1991 JP 351815/91**

(43) Date of publication of application:
**14.07.1993 Bulletin 1993/28**

(73) Proprietor: **Stanley Electric Co., Ltd.
Meguro-ku Tokyo 153 (JP)**

(72) Inventors:
  • **Ohmamyuda, Yukio
    Sagamihara-shi, Kanagawa-ken (JP)**
  • **Kimura, Shigeru
    Yokohama-shi, Kanagawa-ken (JP)**
  • **Tanabe, Toru
    Machida-shi, Tokyo (JP)**
  • **Iwasaki, Kazuhisa
    Yokohama-shi, Kanagawa-ken (JP)**
  • **Seto, Takao
    Yokohama-shi, Kanagawa-ken (JP)**
  • **Kitamura, Hideki
    Yokohama-shi, Kanagawa-ken (JP)**
  • **Senoo, Yasushi
    Yokohama-shi, Kanagawa-ken (JP)**

(74) Representative: **Jung, Elisabeth, Dr.
Patentanwälte,
Dr. Elisabeth Jung,
Dr. Jürgen Schirdewahn,
Claus Gernhardt,
Postfach 40 14 68
80714 München (DE)**

(56) References cited:
**EP-A- 0 448 756          US-A- 4 833 469**

  • **FUNKSCHAU no. 6, 1975, MUNCHEN DE pages
    55 - 57 BOLLHAGEN ET AL. 'Ein
    Infrarot-Auffahrschutzgerät für Kraftfahrzeuge'**

## Description

## SPECIFICATION

## BACKGROUND OF THE INVENTION

### 1. Field of the Invention

The present invention relates to an apparatus and a method of warning a rear-end collision of an automotive vehicle measuring a distance between the present vehicle and a preceding vehicle, computing the then state (e.g. a velocity) of the present vehicle and warning when anticipating a possible rear-end collision of the present vehicle against the preceding vehicle.

### 2. Background Art

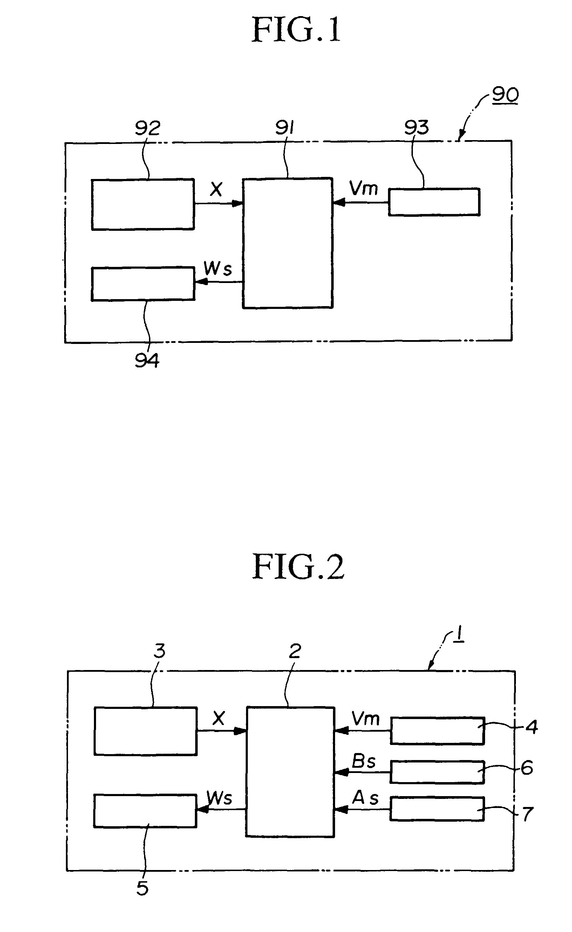

A block diagram of an electronic circuit of a prior art rear-end collision warning apparatus is identical to FIG. 1 showing a block diagram of an electronic circuit of a rear-end collision warning apparatus according to a first embodiment of the present invention. The prior art rear-end collision warning apparatus comprises a distance sensor 92, a central processing unit (CPU) comprising, e.g., a microprocessor, a vehicle velocity sensor 93, and a display or alarm 94. The CPU receives distance signal X of a vehicle-to-vehicle distance between the present vehicle and the preceding vehicle from the distance sensor 92 and velocity signal $V_m$ of the present vehicle from the vehicle velocity sensor 93 and produces warning signal $W_s$ on the alarm 94. The alarm 94 warns a possible rear-end collision to a driver of the present vehicle, e.g., with voice.

The CPU compares velocity signals $V_m$ with distance signals X and produces warning signals $W_s$ when velocity signal $V_m$ indicates 100 km/h and distance signal X indicates 100 m or lower, when velocity signal $V_m$ indicates 80 km/h and distance signal X indicates 80 m or lower and when the velocity signal $V_m$ indicates 60 km/h and distance signal X indicates 60 m or lower.

The prior art rear-end collision warning apparatus measures only the vehicle-to-vehicle distance for the preceding vehicle but no state of the preceding vehicle. Therefore, the prior art rear-end collision warning apparatus must determine a criterion for producing warning signals $W_s$ in view of the estimated worst case, e.g., a case where the preceding vehicle is in a standing position. It follows then that the prior art rear-end collision warning apparatus must produce warning signal $W_s$ in response to a predetermined vehicle-to-vehicle distance, e.g., even if the preceding vehicle runs faster than the present vehicle to increase the vehicle-to-vehicle distance with time and no rear-end collision of the present vehicle is normally expected to take place. This causes a driver of the present vehicle to have a clear feeling of physical disorder. On the other hand, when a case, e.g., a case where the preceding vehicle moves backwards, worse than the estimated worst case takes place, the prior art rear-end collision warning apparatus produces warning signal Ws too late, which is insufficient in the performance.

In US-A-4 027 231 there is disclosed an apparatus for warning a possible rear-end collision of two vehicles, said apparatus having means for emitting and analysing the reflections of an electromagnetic radiation beam. However, this apparatus uses time instead of distance for warning purpose.

## SUMMARY OF THE INVENTION

An object of the present invention is to provide an apparatus and a method of warning a rear-end collision of an automotive vehicle always in time. In order to achieve the object, an apparatus of warning a possible rear-end collision of a vehicle having the apparatus of warning the possible rear-end collision against a preceding vehicle according to the present invention comprises a computer, a distance sensor measuring a vehicle-to-vehicle distance between the present vehicle and the preceding vehicle and sending a distance signal to the computer, a velocity sensor sensing a velocity of the present vehicle and sending a velocity signal to the computer, a braking sensor sensing a state of a brake of the present vehicle and sending a braking signal to the computer, an acceleration sensor sensing a degree of opening of an accelerator of the present vehicle and sending an acceleration signal to the computer, an alarm receiving a warning signal from the computer, the computer computing an anticipated rear-end collision time by the equation:

$$Ta = \frac{X - Tk \times Vm}{\frac{\alpha \times Ta \times G}{2} + Vr}$$

, where $T_a$ is anticipated rear-end collision time in seconds, X is vehicle-to-vehicle distance between the present vehicle and the preceding vehicle in meters, $T_k$ is buffer time in seconds, $V_m$ is velocity of the present vehicle in m/s, $\alpha$ is a state parameter of the present vehicle, $V_r$ is relative velocity in m/s, and G is acceleration on relative velocity $V_r$, the computer sending the warning signal to the alarm, the computer changing the value of the parameter $\alpha$ in response to the braking signal and the acceleration signal, and the alarm warning in response to the computed anticipated rear-end collision time.

A method of warning a possible rear-end collision comprises the steps of detecting a vehicle-to-vehicle distance between a vehicle and a preceding vehicle, detecting a velocity of the present vehicle, detecting a state of a brake of the present vehicle, detecting a degree of opening of an accelerator of the present vehicle, computing an anticipated rear-end collision time by the equation:

$$Ta = \frac{X - Tk \times Vm}{\frac{\alpha \times Ta \times G}{2} + Vr}$$

, where $T_a$ is anticipated rear-end collision time in seconds, $X$ is vehicle-to-vehicle distance between the present vehicle and the preceding vehicle in meters, $T_k$ is buffer time in seconds, $V_m$ is velocity of the present vehicle in m/s, $\alpha$ is a state parameter of the present vehicle, $V_r$ is relative velocity in m/s and, $G$ signs acceleration on relative velocity $V_r$, the parameter $\alpha$ depending on the state of the brake and the degree of opening of the accelerator, and warning in response to the computed anticipated rear-end collision time.

In the present invention, the apparatus does not warn a rear-end collision when the preceding vehicle faster runs than the present vehicle even if the vehicle-to-vehicle distance between the present vehicle and the preceding vehicle has reached a predetermined value at which the apparatus is to warn the rear-end collision. On the other hand, the apparatus can warn a possible rear-end collision long ago before the vehicle-to-vehicle distance has reached the predetermined value at which the apparatus is to warn the rear-end collision, when the preceding vehicle moves backwards. Thus, the apparatus can always appropriately warn the possible collision in response to the actual relationship between the present vehicle and the preceding vehicle.

In addition, the apparatus can serially produce warning signals from a case of safety to a case of danger in accordance with degrees of dangerousness so as to clearly notice the degrees of dangerousness to the driver of the present vehicle.

## BRIEF DESCRIPTION OF THE DRAWINGS

FIG.1 is a block diagram of an electronic circuit of a rear-end collision warning apparatus according to a first embodiment of the present invention; and FIG.2 is a block diagram of an electronic circuit of a rear-end collision warning apparatus according to a second embodiment of the present invention.

## DETAILED DESCRIPTION OF THE PREFERRED EMBODIMENTS

Preferred embodiments of the present invention will be described with reference to the drawings hereinafter. A block diagram of an electronic circuit of a rear-end collision warning apparatus 90 of FIG.1 is identical to that of the prior art rear-end collision warning apparats as described above. The rear-end collision warning apparatus 90 comprises a distance sensor 92, a central processing unit (CPU) 91 comprising, e.g., a microprocessor, a vehicle velocity sensor 93, and a display or alarm 94.

Unlike the CPU of the prior art rear-end collision warning apparatus, the CPU 91 computes relative velocity $V_r$ of the preceding and present vehicles, acceleration $G$ due to a change of relative velocity $V_r$, and then anticipated rear-end collision time $T_a$ (i.e. a period of time from the present time to an anticipated rear-end collision) from computed relative velocity $V_r$. by the equation (1):

$$Ta = \frac{X - Tk \times Vm}{\frac{Ta \times G}{2} + Vr} \qquad (1)$$

, where $T_a$ is anticipated rear-end collision time in seconds, $X$ is vehicle-to-vehicle distance between the present vehicle and the preceding vehicle in meters, $T_k$ is buffer time in seconds, $V_m$ is velocity of the present vehicle in m/s, $V_r$ is relative velocity in m/s and, $G$ signs acceleration on relative velocity $V_r$. The CPU 91 then produces warning signal $W_s$ from computed anticipated rear-end collision time $T_a$.

The computation of anticipated rear-end collision time $T_a$ by the CPU 91 will be described hereinafter.

In principle, anticipated rear-end collision time $T_a$ equals $X/V_r$. For example, when vehicle-to-vehicle distance $X$ equals 100 m and relative velocity $V_r$ equals 5 m/s (i.e. the present vehicle approaches a preceding vehicle at a velocity of 5 m/s), anticipated rear-end collision time $T_a$ equals 20 seconds (=100 m/5 m/s). The CPU 91 computes relative velocity $V_r$ from distance signals $X$ of the distance sensor 92. For example, when the distance sensor 92 measures vehicle-to-vehicle distance $X$ every sampling time $T_s$ of 100 milliseconds, and the last measured vehicle-to-vehicle distance $X_1$ equals 100.5 m, and the present measured vehicle-to-vehicle distance $X_2$ equals 100 m, relative velocity $V_r$ equals 5 m/s (=(100.5 m - 100 m)/0.1 s).

The computation of anticipated rear-end collision time $T_a$ employs the factors of buffer time $T_k$ and acceleration $G$ due to the change of relative velocity $V_r$ in order to produce fine anticipated rear-end collision time $T_a$.

Buffer time $T_k$ is defined as a period of time during which the driver of the present vehicle views a danger and then brakes. If velocity $V_m$ of the present vehicle is 100 km/h (i.e. approximately 30 m/s) and buffer time $T_k$ equals 0.5 s, the present vehicle will run 15 m unbraked until the driver of the present vehicle starts braking. Buffer time $T_k$ is given as a constant to the present vehicle and velocity $V_m$ of the present vehicle times buffer time $T_k$ produces an unbraked run distance of the present vehicle. The unbraked run distance is detracted from vehicle-to-vehicle distance $X$ (see the above equation (1)) to produce an actual braked vehicle-to-vehicle distance.

When the unbraked run distance is more than vehicle-to-vehicle distance $X$, i.e., the value ($X - T_a \times V_m$) is negative, this means that the present vehicle have approached the preceding vehicle so that the driver of the present vehicle has no actual buffer time $T_k$. The CPU 91 immediately produces warning signal $W_s$ on the dis-

play 94.

Acceleration G matches a variation of relative velocity $V_r$ due to, e.g., the braking of the present vehicle. The employment of acceleration G in the equation (1) always gives accurate anticipated rear-end collision time $T_a$ immediately after relative velocity $V_r$ has changed, to increase the accuracy of the rear-end collision warning apparatus 90. Therefore, the CPU 91 can produce real warning signals $W_s$, cutting a momentary fluctuation in relative velocity $V_r$.

Acceleration G is defined as a differential of relative velocity $V_r$ and actually produced by the equation (2):

$$G = \frac{Vr1 - Vr2}{Ts} \qquad (2)$$

, wherein $V_{r1}$ is the present computed relative velocity, $V_{r2}$ is the last computed relative velocity and $T_s$ is a sampling period of time. When vehicle-to-vehicle distance X decreases, acceleration G is positive. On the other hand, when vehicle-to-vehicle distance X increases, acceleration G is negative.

Acceleration G times anticipated rear-end collision time $T_a$ gives a variation of relative velocity $V_r$ due to acceleration G for anticipated rear-end collision time $T_a$. The half of acceleration G times anticipated rear-end collision time $T_a$ gives an average velocity of the present vehicle for anticipated rear-end collision time $T_a$. Therefore, an addition of the half of acceleration G times anticipated rear-end collision time $T_a$ to relative velocity $V_r$ (see the above equation (1)) causes anticipated rear-end collision time $T_a$ to involve the factor of the change of relative velocity $V_r$ immediately after relative velocity $V_r$ has changed. Thus, the rear-end collision warning increases the accuracy in the anticipation. Anticipated rear-end collision time $T_a$ is constant as long as acceleration G is constant. The rear-end collision warning apparatus 90 can preclude an unstable condition that anticipated rear-end collision time $T_a$ changes every time relative velocity $V_r$ has changed.

In operation, the apparatus first computes anticipated rear-end collision time $T_a$ by the equation (3):

$$Ta = \frac{X}{Vr} \qquad (3)$$

and corrects anticipated rear-end collision time $T_a$ by acceleration G on relative velocity $V_r$ to produce warning signal $W_s$ corresponding to an actual relationship between the present vehicle and the preceding vehicle.

Thus, anticipated rear-end collision time $T_a$ constituting warning signal $W_s$ from the CPU 91 can provide a series of a 20-second before collision, a 19-second before collision, a 18-second before collision --- so that the apparatus can serially warn by degrees of danger.

As shown in FIG.2, a rear-end collision warning apparatus 1 according to the present invention comprises a central processing unit (CPU) 2, a distance sensor 3

measuring a vehicle-to-vehicle distance between the present vehicle and the preceding vehicle and sending vehicle-to-vehicle distance signal X to the CPU 2, a vehicle velocity sensor 4 concurrently sending velocity signal $V_m$ of the present vehicle to the CPU 2, a display or alarm 5 receiving warning signal $W_s$ from the CPU 2 and warning to a driver of the present vehicle, a braking sensor 6 sending braking signal $B_s$ of a brake to the CPU 2, and an acceleration sensor 7 sending acceleration signal $A_s$ of an accelerator to the CPU 2.

The rear-end collision warning apparatus 1 employs a braking and an acceleration of the driver of the present vehicle as additional factors for a fine computation of anticipated rear-end collision time $T_a$. These additional factors serve to finely correct anticipated rear-end collision time $T_a$.

The CPU 2 computes relative velocity $V_r$ of the present and preceding vehicles, acceleration G, and then anticipated rear-end collision time $T_a$ from computed relative velocity $V_r$ by the equation (4):

$$Ta = \frac{X - Tk \times Vm}{\frac{\alpha \times Ta \times G}{2} + Vr} \qquad (4)$$

, where $\alpha$ is a state parameter of the present vehicle. The value of the parameter $\alpha$ depends on a state of a brake of the present vehicle and a degree of opening of an accelerator of the present vehicle. When the braking sensor 6 produces no braking signal and the acceleration sensor 7 produces no acceleration signal, the value of $\alpha$ equals 1. The CPU 2 produces warning signal $W_s$ from computed anticipated rear-end collision time $T_a$.

The CPU 2 produces a first acceleration G by the equation (1) when $\alpha$ is 1. It is easily anticipated that the present vehicle will be accelerated at a second acceleration G greater than the first acceleration G when acceleration signal $A_s$ indicates a degree of opening of an accelerator larger than a predetermined value. Thus, the CPU 2 computes ($\alpha \times G$) by the equation (4) to produce anticipated rear-end time $T_a$ shorter than that produced by the equation (1), where $\alpha > 1$. On the other hand, when the CPU 2 has received braking signal $B_s$, the CPU 2 selects the parameter $\alpha$ to be a corresponding value and computes ($\alpha \times G$) by the equation (4) to produce anticipated rear-end time $T_a$ longer than that produced by the equation (1), where $\alpha < 1$.

**Claims**

1. An apparatus (1) for warning of a possible rear-end collision of a vehicle having the apparatus for warning of the possible rear-end collision with a preceding vehicle, comprising:

    a computer (2);
    a distance sensor (3) measuring a vehicle-to-vehicle distance between the present vehicle and the preceding vehicle and sending a distance signal (X) to said computer (2);

a velocity sensor (4) sensing a velocity of the present vehicle and sending a velocity signal (Vm) to said computer (2);

an alarm (5) receiving a warning signal (Ws) from said computer (2);

characterized by

a braking sensor (6) sensing a state of a brake of the present vehicle and sending a braking signal (Bs) to said computer (2);
an acceleration sensor (7) sensing a degree of opening of an accelerator of the present vehicle and sending an acceleration signal (AS) to said computer (2);
said computer (2) computing an anticipated rear-end collision time by the equation:

$$Ta = \frac{X - Tk x Vm}{\frac{\alpha x Ta x G}{2} + Vr}$$

where Ta is the anticipated rear-end collision time in seconds,
X is the vehicle-to-vehicle distance between the present vehicle and the preceding vehicle in meters, Tk is the buffer time in seconds, Vm is the velocity of the present vehicle in m/s, $\alpha$ is a state parameter of the present vehicle, Vr is the relative velocity in m/s, and G is the acceleration of the relative velocity Vr, said computer (2) sending the warning signal (Ws) to said alarm (5), said computer changing the value of the parameter $\alpha$ in response to the braking signal (Bs) and the acceleration signal; and said alarm (5) warning in response to the computed anticipated rear-end collision time.

2. A method of warning of a possible rear-end collision comprising the steps of:

detecting a vehicle-to-vehicle distance between a vehicle and a preceding vehicle;
detecting a velocity of the present vehicle (Vm);

characterized by

detecting a state of a brake of the present vehicle;
detecting a degree of opening of an accelerator of the present vehicle
computing an anticipated rear-end collision time by the equation:

$$Ta = \frac{X - Tk x Vm}{\frac{\alpha x Ta x G}{2} + Vr}$$

where Ta is the anticipated rear-end collision time in seconds, X is the vehicle-to-vehicle distance between the present vehicle and the preceding vehicle in meters, Tk is the buffer time in seconds, Vm is the velocity of the present vehicle in m/s, $\alpha$ is a state parameter of the present vehicle, Vr is the relative velocity in m/s, and G is the acceleration of the relative velocity Vr, the value of said parameter $\alpha$ depending on the state of the brake and the degree of opening of the accelerator; and warning in response to the computed anticipated rear-end collision time (Ta).

## Patentansprüche

1. Vorrichtung (1) zur Warnung vor einem möglichen Auffahrunfall eines Fahrzeugs, das mit der Vorrichtung zur Warnung vor dem möglichen Auffahrunfall ausgerüstet ist, auf ein voraus fahrendes Fahrzeug, mit

einem Computer (2);
einem Entfernungsmesser (3), der eine Fahrzeug-Fahrzeug-Entfernung zwischen dem betreffenden Fahrzeug und dem vorausfahrenden Fahrzeug mißt und ein Entfernungssignal (X) an den Computer (2) schickt;
einem Geschwindigkeitsmesser (4), der eine Geschwindigkeit des betreffenden Fahrzeugs erfaßt und ein Geschwindigkeitssignal ($V_m$) an den Computer (2) schickt;
einem Alarm (5), der ein Warnsignal ($W_s$) von dem Computer (2) empfängt;

**gekennzeichnet durch**

einen Bremssensor (6), der eine Stellung einer Bremse des betreffenden Fahrzeugs erfaßt und ein Bremssignal ($B_s$) an den Computer (2) schickt;
einen Beschleunigungssensor (7), der einen Öffnungsgrad einer Drosselklappe des betreffenden Fahrzeugs erfaßt und ein Beschleunigungssignal ($A_s$) an den Computer (2) schickt;
wobei der Computer (2) eine Zeit bis zum erwarteten Auffahrunfall mittels folgender Gleichung berechnet:

$$Ta = \frac{X - Tk \times Vm}{\frac{\alpha \times Ta \times G}{2} + Vr}$$

wobei Ta die Zeit bis zum erwarteten Auffahrunfall in Sekunden ist,

X die Fahrzeug-Fahrzeug-Entfernung zwischen dem betreffenden Fahrzeug und dem vorausfahrenden Fahrzeug in Metern ist, Tk die Reaktionszeit in Sekunden ist, Vm die Geschwindigkeit des betreffenden Fahrzeugs in m/s ist, α ein Zustandsparameter des betreffenden Fahrzeugs ist, Vr die Relativgeschwindigkeit in m/s ist und G die Beschleunigung der Relativgeschwindigkeit Vr ist, wobei der Computer (2) das Warnsignal (Ws) an den Alarm (5) schickt und der Computer den Wert des Parameters α nach Maßgabe des Bremssignals (Bs) und des Beschleunigungssignals ändert; und

wobei der Alarm (5) nach Maßgabe der berechneten Zeit bis zum erwarteten Auffahrunfall warnt.

2. Verfahren zum Warnen vor einem möglichen Auffahrunfall, das folgende Schritte umfaßt:

Erfassen einer Fahrzeug-Fahrzeug-Entfernung zwischen einem Fahrzeug und einem vorausfahrenden Fahrzeug;
Erfassen einer Geschwindigkeit des betreffenden Fahrzeugs ($V_m$);

**gekennzeichnet durch**

das Erfassen einer Stellung einer Bremse des betreffenden Fahrzeugs;
das Erfassen eines Öffnungsgrades einer Drosselklappe des betreffenden Fahrzeugs;
das Berechnen einer Zeit bis zum erwarteten Auffahrunfall mittels folgender Gleichung:

$$Ta = \frac{X\text{-}Tk \times Vm}{\dfrac{\alpha \times Ta \times G}{2} + Vr}$$

wobei Ta die Zeit bis zum erwarteten Auffahrunfall in Sekunden ist, X die Fahrzeug-Fahrzeug-Entfernung zwischen dem betreffenden Fahrzeug und dem vorausfahrenden Fahrzeug in Metern ist, Tk die Reaktionszeit in Sekunden ist, Vm die Geschwindigkeit des betreffenden Fahrzeugs in m/s ist, α ein Zustandsparameter des betreffenden Fahrzeugs ist, Vr die Relativgeschwindigkeit in m/s ist und G die Beschleunigung der Relativgeschwindigkeit Vr ist, wobei der Wert des Parameters α von der Stellung der Bremse und dem Öffnungsgrad der Drosselklappe abhängt; und
das Warnen nach Maßgabe der berechneten Zeit ($T_a$) bis zum erwarteten Auffahrunfall.

**Revendications**

1. Dispositif (1) pour l'avertissement d'une collision possible par l'arrière d'un véhicule possédant le dispositif d'avertissement de la collision possible par l'arrière avec un véhicule précédent, comprenant :

- un calculateur (2);
- un détecteur de distance (3) mesurant une distance de véhicule à véhicule entre le présent véhicule et le véhicule précédent et envoyant un signal de distance (X) audit calculateur (2);
- un capteur de vitesse (4) détectant une vitesse du présent véhicule et envoyant un signal de vitesse ($V_m$) audit calculateur (2);
- un système d'alarme (5) recevant un signal d'avertissement ($W_s$) dudit calculateur (2);

dispositif caractérisé par :

- un capteur de freinage (6) détectant un état de freinage du présent véhicule et envoyant un signal de freinage ($B_s$) audit calculateur (2);
- un capteur d'accélération (7) détectant un degré d'ouverture d'un accélérateur du présent véhicule et envoyant un signal d'accélération (As) audit calculateur (2);

ledit calculateur (2) calculant un temps de collision anticipée par l'arrière selon l'Équation suivante :

$$T_a = \frac{X\text{-}T_k x V_m}{\dfrac{\alpha x T_a x G}{2} + V_r}$$

où $T_a$ est le temps de collision anticipée par l'arrière en secondes, X est la distance de véhicule à véhicule entre le présent véhicule et le véhicule précédent en mètres, $T_k$ est le temps tampon en secondes, $V_m$ est la vitesse du présent véhicule en m/s, α est un paramètre d'état du présent véhicule, $V_r$ est la vitesse relative en m/s et G est l'accélération de la vitesse relative $V_r$, ledit calculateur (2) envoyant le signal d'avertissement ($W_s$) audit système d'alarme (5), ledit calculateur modifiant la valeur du paramètre α en réponse au signal de freinage ($B_s$) et au signal d'accélération; et
ledit système d'alarme (5) avertissant en réponse au temps de collision anticipée par l'arrière calculé.

2. Procédé d'avertissement d'une collision possible par l'arrière comprenant les étapes suivantes:

- la détection d'une distance de véhicule à véhicule entre un présent véhicule et un véhicule précédent;

- la détection d'une vitesse du présent véhicule ($V_m$);

    procédé caractérisé par :

- la détection d'un état de freinage du présent véhicule;
- la détection d'un degré d'ouverture d'un accélérateur du présent véhicule;
- le calcul d'un temps de collision anticipée par l'arrière selon l'Équation suivante :

$$T_a = \frac{X - T_k x V_m}{\frac{\alpha x T_a x G}{2} + V_r}$$

où $T_a$ est le temps de collision anticipée par l'arrière en secondes, X est la distance de véhicule à véhicule entre le présent véhicule et le véhicule précédent en mètres, $T_k$ est le temps tampon en secondes, $V_m$ est la vitesse du présent véhicule en m/s, $\alpha$ est un paramètre d'état du présent véhicule, $V_r$ est la vitesse relative en m/s et G est l'accélération de la vitesse relative $V_r$, la valeur dudit paramètre $\alpha$ dépendant de l'état de freinage et du degré d'ouverture de l'accélérateur; et

- l'avertissement en réponse au temps de collision anticipée par l'arrière calculé ($T_a$).

# FIG.1

# FIG.2